# EUROPÄISCHE PATENTSCHRIFT

(11) **EP 2 768 697 B1**
(45) Veröffentlichungstag und Bekanntmachung des Hinweises auf die Patenterteilung: **05.12.2018**
(21) Anmeldenummer: 12772076.1
(22) Anmeldetag: 08.10.2012
(51) Int. Cl.: B60N 2/90, B60N 2/36, B60N 2/22

(54) **VERRIEGELUNGS- UND NEIGUNGSVERSTELLANORDNUNG, INSBESONDERE LEHNENSCHLOSS**
LOCKING AND INCLINATION-ADJUSTING ARRANGEMENT, IN PARTICULAR BACKREST LOCK
ENSEMBLE DE VERROUILLAGE ET DE RÉGLAGE DE L'INCLINAISON, EN PARTICULIER SERRURE DE DOSSIER

(30) Priorität: 22.10.2011 DE 102011116709
(43) Veröffentlichungstag der Anmeldung: 27.08.2014
(73) Patentinhaber: Volkswagen Aktiengesellschaft, 38440 Wolfsburg (DE); Witte Automotive GmbH, 42551 Velbert (DE)
(72) Erfinder: BOY, Hans-Joachim, 38518 Gifhorn (DE); WAGELS, Robert, 52511 Geilenkirchen (DE); MENSCH, Reinaldo, 42113 Wuppertal (DE)
(74) Vertreter: Gulde & Partner
(86) Internationale Anmeldenummer: PCT/EP2012/004202
(87) Internationale Veröffentlichungsnummer: WO 2013/056792

(56) Entgegenhaltungen:
- FR-A1- 2 532 595
- FR-A1- 2 892 984

## Beschreibung

Die Erfindung betrifft eine Verriegelungs- und Neigungsverstellanordnung für einen Kraftfahrzeugsitz mit den im Oberbegriff des Anspruchs 1 genannten Merkmalen.

Es ist bekannt, vorklappbare Rückenlehnen von Kraftfahrzeugsitzen entriegelbar an der Karosserie zu befestigen. Aus dem Stand der Technik sind Lösungen bekannt, bei denen die bewegliche Rückenlehne manuell oder über Stellantriebe von der Karosserie lösbar und vom Fahrzeugnutzer bedienbar ist. Die hierfür notwendigen manuellen oder automatischen Verriegelungseinrichtungen werden zumeist seitlich der Rückenlehne angeordnet. Solche Verriegelungseinrichtungen für Rückenlehnen von Kraftfahrzeugsitzen mit seitlicher Anordnung, sowohl nur zum Klappen der Rückenlehne, als auch zum Klappen und zur Neigungsverstellung der Rückenlehne sind Gegenstand einiger Publikationen.

Manuelle Verriegelungs- und Neigungsverstelleinrichtungen gehen aus verschiedenen Druckschriften hervor.

Die Druckschrift DE 195 40 390 A1 offenbart einen Fahrzeugsitz mit einer manuell bedienbaren Haltevorrichtung zum Festlegen einer Rückenlehne des Fahrzeugsitzes an der Fahrzeugkarosserie. Zwecks begrenzter Einstellung der Rückenlehnenneigung zum Sitzkissen bei gleichzeitiger Sicherung der Rückenlehne an der Fahrzeugkarosserie sind lehnenseitige und karosserieseitige Halteelemente ausgebildet. Die Anstellung der Rückenlehne gegenüber dem Sitzkissen ist in gewissen Grenzen frei wählbar.

Die Druckschrift DE 30 45 309 A1 beschreibt eine weitere manuell bedienbare Kinematik für einen Rücksitz eines Kraftfahrzeuges mit einer nach vorne umlegbaren Rückenlehne, die nahe ihrem oberen Ende mittels eines Bolzens und eines mit diesem zusammenwirkenden Rastmittels an der Karosserie gehalten ist. Der Bolzen ist mit der Rückenlehne oder einem mit der Karosserie verbundenen Führungsteil parallel zu sich selbst etwa in Fahrzeuglängsrichtung bewegbar und ist in mehreren verschiedene Winkellagen für die Rückenlehne ergebenden Stellungen mit den an der Karosserie beziehungsweise an der Rückenlehne befindlichen Rastmittel verbindbar.

Automatisch antreibbare Verriegelungs- und/oder Neigungsverstelleinrichtungen gehen ebenfalls aus verschiedenen Druckschriften hervor.

Eine automatisch antreibbare Neigungsverstelleinrichtung für eine Rückenlehne geht aus der Druckschrift DE 43 16 567 A1 hervor. Sie offenbart einen Fahrzeugsitz der ein Sitzteil umfasst, an dem das untere Ende einer schwenkbaren Rückenlehne angelenkt ist. Ein Schwenkbereich der Rückenlehne wird erreicht, indem ein an einem Holm angeordneter elektromotorischer Stellantrieb mit Abstand von der Schwenkachse der Rückenlehne an der Rückenlehne angreift, der die Schwenkbewegung der Rückenlehne übernimmt.

Eine weitere automatisch betriebene Neigungsverstelleinrichtung für eine Rückenlehne offenbart die Druckschrift DE 102 09 759 A1. Ein Fahrzeugsitz oder eine Rücksitzbank umfasst ein Sitzteil und eine Rückenlehne, der/die eine mit einem elektrischen Antrieb bewirkte Umklappfunktion aufweist, wobei die Umklappfunktion ein Umklappen der Rückenlehne oder eines Rückenlehnenteils relativ zum Sitzteil bewirkt. Die Umklappfunktion wird dadurch erreicht, da der elektrische Antrieb eine Neigungsverstellfunktion aufweist, wobei die Verstellgeschwindigkeit des elektrischen Antriebes derart veränderbar ist, dass für die Neigungsverstellfunktion und für die Umklappfunktion jeweils eine unterschiedliche Geschwindigkeit einstellbar ist.

Eine Kombination zum Ver- und Entriegeln sowie zur elektrischen Neigungsverstellung einer Rückenlehne ist ferner aus der Druckschrift DE 199 26 839 C1 bekannt. Die Patentschrift offenbart eine Neigungsverstelleinrichtung mit einem bügelartigen Aufnahmeorgan, welches mit einer Rückenlehne, insbesondere an deren oberen Ende schwenkbar über eine seitlich angeordnete Verriegelungsklinke verbunden ist. Ein Lösen dieser Verriegelungsklinke erlaubt hier neben der Neigungsverstellung auch ein Vorklappen der Rückenlehne.

Eine weitere Verriegelungs-/Verstellanordnung zum Verriegeln und Verstellen einer umklappbaren Sitzlehne eines Fahrzeugsitzes mit einer Antriebseinrichtung lehrt die Druckschrift DE 10 2008 064 523 A1. Die Verriegelungs-/Verstellanordnung zum Verriegeln und Verstellen einer schwenkbaren Rückenlehne weist eine karosserieseitig angeordnete Verriegelungs-/Verstelleinrichtung, die ein Verriegelungselement umfasst, sowie ein sitzlehnenseitiges Schloss auf. Dabei weist die Verriegelungs-/Verstelleinrichtung ein mit einer Antriebsspindel zusammenwirkendes und das Verriegelungselement tragendes Trägerteil sowie eine Antriebseinrichtung auf, so dass über das mit der Antriebseinrichtung wirkungsverbundene Verriegelungselement, die mit diesem verbundene Sitzlehne in ihrer Neigung verstellbar ist.

Ferner wird auf die Druckschrift FR 2 532 595 A1 verwiesen, die einen Verriegelungs- und Neigungsverstellmechanismus für die Oberseite einer Rückenlehne gegenüber einem Karosserieelement offenbart. Es werden Schlösser von jedem der seitlichen Teile der Rückenlehne getragen, deren Bolzen in ein Element eingreifen, das einen Riegel bildet, der an der angrenzenden Seitenwand der Karosserie oder an einer an dieser Seitenwand befestigten Hilfswand befestigt ist.

In der Praxis hat sich herausgestellt, dass die mit einem Antrieb versehenen Lösungen zur Neigungsverstellung sehr komfortabel sind. Sie sind aber relativ aufwändig und damit teuer, wobei hinzukommt, dass insbesondere bei mehrteiligen Rückenlehnen bereits zwei Antriebe benötigt werden, um die Rückenlehnenteile einer zweiteiligen Rückenlehne getrennt voneinander automatisch in ihrer Neigung verstellen zu können. Aus diesem Grund besteht weiterhin ein großer Bedarf an preiswerten ebenfalls möglichst komfortablen manuellen Verriegelungs- und Verstellanordnungen. Dabei geht die Erfindung von einigen Randbedingungen aus, die eine neue manuelle Verriegelungs- und Verstellanordnung erfüllen soll. Eine erste Randbedingung besteht darin, dass karosserieseitig nur ein geringer Aufwand zur Herstellung einer Verriegelungs- und Verstellanordnung notwendig sein soll. Eine zweite Randbedingung besteht darin, dass die Rückenlehne neigungsverstellbar und zum Umlegen auf ein Sitzteil entriegelbar ist. Eine dritte Randbedingung betrifft die Sicherheit der Verriegelungs- und Verstellanordnung. Bei der Neigungsverstellung soll die Rückenlehne stets in einem sicheren Zustand verbleiben, so dass eine Neigungsverstellung möglich ist, ohne dass die Rückenlehne gegenüber der Karosserie frei beweglich ist. Mindestens eine der Randbedingungen wird von den aus dem Stand der Technik bekannten Verriegelungs- und Verstellanordnungen nicht erfüllt.

Der Erfindung liegt nun die Aufgabe zugrunde, eine sichere Verriegelungs- und Verstellanordnung, insbesondere ein sicheres Lehnenschloss zu schaffen, welches an einer Rückenlehne angebracht ist und gegenüber einer Karosserie eine sichere Verriegelbarkeit und Neigungsverstellbarkeit erlaubt, wobei der karosserieseitig notwendige Aufwand zur Anbindung der Rückenlehne an der Karosserie möglichst gering gehalten werden soll.

Ausgangspunkt für die Erfindung, ist eine Verriegelungs- und Neigungsverstellanordnung zur Verriegelung und Neigungsverstellung eines Bauteiles, umfassend einen karosserieseitigen Schlossbügel und ein bauteilseitiges Schloss, welches in einer Verriegelungsposition mit dem Schlossbügel verbunden und in einer Entriegelungsposition von dem Schlossbügel lösbar ist, wobei das bauteilseitige Schloss Drehfallen mit ihnen zugeordneten Sperrklinken aufweist, in denen das Bauteil in verschiedenen wieder lösbaren Rastpositionen an dem in das Schloss eingreifenden Schlossbügel in verschiedene Neigungen verstellbar und verriegelbar und von dem Schlossbügel getrennt in die Entriegelungsposition bringbar ist.

Erfindungsgemäß ist vorgesehen, dass durch eine Betätigung einer der Anordnung zugeordneten ersten Betätigungsmechanik eine Verstellung der verschiedenen Neigungen des Bauteiles von einer Rastposition zur anderen und umgekehrt erfolgt.

Durch die Betätigung der ersten Betätigungsmechanik der Verriegelungs- und Neigungsverstellanordnung erfolgt eine Verstellung der verschiedenen Neigungen des Bauteiles von einer Rastposition zur anderen und umgekehrt. In vorteilhafter Weise ist ein Wechsel von einer Rastposition zur anderen und umgekehrt möglich. Die verschiedenen Rastpositionen erlauben die Einstellung einer Frachtposition einer Normalposition des Bauteiles, welches insbesondere eine Rückenlehne eines Fahrzeugsitzes ist, wobei in der Beschreibung auf die erreichbaren Vorteile noch näher eingegangen wird.

Gemäß der weiter entwickelten Verriegelungs- und Neigungsverstellanordnung weist das bauteilseitige Schloss Drehfallen mit ihnen zugeordneten Sperrklinken auf, in denen das Bauteil in verschiedenen wieder lösbaren Rastpositionen an dem in das Schloss eingreifenden Schlossbügel in verschiedene Neigungen verstellbar und verriegelbar und von dem Schlossbügel getrennt in die Entriegelungsposition bringbar ist.

In vorteilhafter Weise werden zur Verriegelung und Neigungsverstellung innerhalb des bauteilseitigen Schlosses mehrere Drehfallen mit ihnen zugeordneten Sperrklinken angeordnet. Drehfallen mit verriegelnden Sperrklinken stellen sichere Verriegelungselemente dar, die besonders robust und langlebig sind und zudem kaum Verschleiß aufweisen.

Es erfolgt eine Verstellung der verschiedenen Neigungen des Bauteiles von einer Rastposition zur anderen und umgekehrt, durch eine Betätigung der ersten Betätigungsmechanik, ohne dass das Bauteil dabei in die Entriegelungsposition kommt. Dadurch wird in vorteilhafter Weise eine Sicherheitsfunktion erreicht, da das Bauteil von einer Rastposition zur anderen und umgekehrt neigungsverstellbar ist, ohne dass das Bauteil dabei in die Entriegelungsposition kommt. Eine Verstellung des Bauteiles von einer Rastposition zur anderen und umgekehrt ist somit möglich, ohne dass eine die Sicherheit des Bauteiles verringernde Entriegelungsposition zustande kommt.

Bevorzugt ist vorgesehen, dass eine vollständige Entriegelung der Rückenlehne vom Schlossbügel ausschließlich durch eine Betätigung einer der Anordnung zugeordneten zweiten Betätigungsmechanik erfolgt. Dabei ist vorgesehen, dass eine Entriegelung des Bauteiles aus jeder der Rastpositionen des Bauteiles in die Entriegelungsposition möglich ist.

Die vollständige Entriegelung erfolgt also in vorteilhafter Weise ausschließlich über die zweite Betätigungsmechanik. Die zweite zur vollständigen Entriegelung des Bauteiles führende Betätigungsmechanik ist somit von der ersten Betätigungsmechanik getrennt, so dass Fehlbedienungen ausgeschlossen sind. Wie in der Beschreibung noch näher erläutert wird, sind die Betätigungsmechaniken auch örtlich voneinander getrennt, so dass hierdurch eine Unterstützung zur Vermeidung von Fehlbedienungen erfolgt. Bei einer Anwendung der Verriegelungs- und Neigungsverstellanordnung in einem Fahrzeug ist zur weiteren Erhöhung der Sicherheit vorgesehen, dass die zweite Betätigungsmechanik eine Entriegelung des Bauteiles aus jeder der Rastpositionen des Bauteiles in die Entriegelungsposition des Bauteiles zulässt, wenn das Fahrzeug nicht in Bewegung ist, wobei auf die zweite Betätigungsmechanik ein Steuerungssignal aufschaltbar ist, welches eine vollständige Entriegelung des Bauteiles nur dann zulässt, wenn sich das Fahrzeug nicht in Bewegung befindet.

Ferner ist vorgesehen, dass das sich in der Entriegelungsposition befindende Bauteil durch eine geschwindigkeitsabhängige Klappbewegung des Bauteiles in einer der beiden Drehfallen in der einen oder anderen Rastposition verriegelbar ist. Hierdurch ist eine für den Bediener einfache Möglichkeit geschaffen, allein durch die Geschwindigkeit der Klappbewegung des Bauteiles die eine oder andere Rastposition zu bewirken. In vorteilhafter Weise müssen dazu keine komplizierten Bauteile angeordnet werden. Die im Lehnenschloss angeordneten Bauteile, die sowieso zur Verriegelung des Bauteiles im Lehnenschloss angeordnet sind, werden dabei derart angeordnet, dass durch die geschwindigkeitsabhängige Klappbewegung des Bauteiles die eine oder andere Rastposition erreichbar ist. Dabei ist vorgesehen, dass sich das in der Entriegelungsposition befindende Bauteil durch eine Klappbewegung in einer ersten Geschwindigkeit in der ersten Rastposition in einer ersten Drehfalle verriegelt oder durch eine Klappbewegung in einer zweiten Geschwindigkeit in der zweiten Rastposition in einer zweiten Drehfalle verriegelt, wobei die erste Geschwindigkeit kleiner ist als die zweite Geschwindigkeit.

Zudem ist in vorteilhafter Weise vorgesehen, dass durch eine der Anordnung zugeordnete Rückenlehnenklappmechanik eine federunterstützte selbsttätige Verstellung einer schwenkbaren Rückenlehne eines Fahrzeugsitzes von den Rastpositionen zu der Entriegelungsposition oder von der zweiten Rastposition der schwenkbaren Rückenlehne zu der ersten Rastposition erfolgt. Diese Anordnung der Rückenlehnenklappmechanik macht die Bedienung des mit der Verriegelungs- und Neigungsverstellanordnung ausgestatteten Bauteiles, insbesondere der Rückenlehne besonders komfortabel, da ein Teil der Verstellbewegungen durch die Rückenlehnenklappmechanik unterstützt wird.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1A: eine perspektivische Darstellung auf eine Verriegelungs- und Neigungsverstellanordnung, insbesondere ein Lehnenschloss, welches eine Rückenlehne oder einen Teil der Rückenlehne mittels eines Schlossbügels gegenüber einer Karosserie in einer Verriegelungsposition hält;
- Figur 1B: die Verriegelungs- und Neigungsverstellanordnung nach Figur 1A in einer Entriegelungsposition;
- Figur 1C: eine vergrößerte perspektivische Darstellung einer zur Verriegelungs- und Neigungsverstellanordnung gehörenden ersten und zweiten Betätigungsmechanik sowie einer Rückenlehnenklappmechanik;
- Figur 2A: eine Seitenansicht auf eine gehäusedeckelloses Lehnenschloss mit einem sich in einer ersten Rastposition der Verriegelungsposition befindenden Schlossbügel;
- Figur 2B: das Lehnenschloss nach Figur 2A mit dem sich in einer zweiten Rastposition der Verriegelungsposition befindenden Schlossbügel;
- Figur 3A: eine Seitenansicht auf das eingehauste Lehnenschloss mit einem sich in einer ersten Rastposition der Verriegelungsposition befindenden Schlossbügel;
- Figur 3B: eine Seitenansicht auf das eingehauste Lehnenschloss mit einem sich in einer zweiten Rastposition der Verriegelungsposition befindenden Schlossbügel;
- Figur 3C: eine Seitenansicht einer Rückenlehne beziehungsweise eines Teiles der Rückenlehne in der ersten und der zweiten Rastposition, gemäß Figur 3A, 3B;
- Figur 4A: eine Seitenansicht des Lehnenschlosses in der ersten Rastposition, gemäß Figur 3A, jedoch gemeinsam mit der Rückenlehne beziehungsweise eines Teiles der Rückenlehne in ihrer Frachtposition;
- Figur 4B: eine Seitenansicht des Lehnenschlosses in der zweiten Rastposition, gemäß Figur 3B, jedoch gemeinsam mit der Rückenlehne beziehungsweise eines Teiles der Rückenlehne in ihrer Normalposition;
- Figur 4C-1: die Rückenlehne beziehungsweise ein Teil der Rückenlehne, gemäß Figur 4A mit ihrer Rückenlehnenklappmechanik und das Lehnenschloss in Frachtposition;

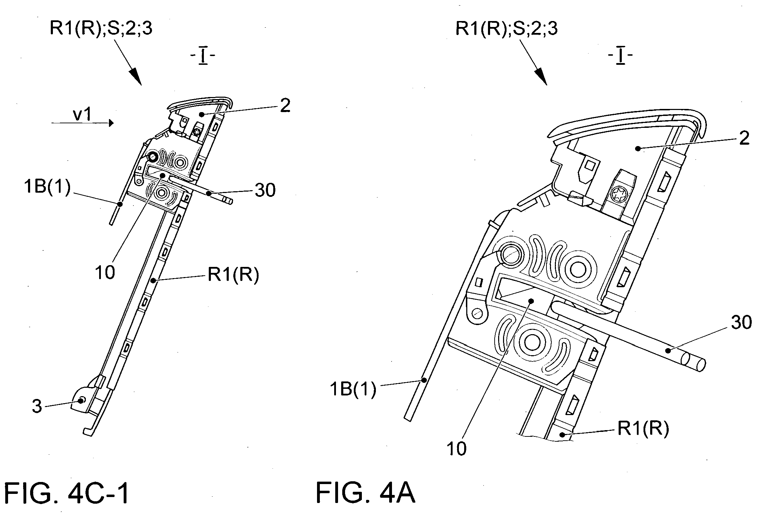

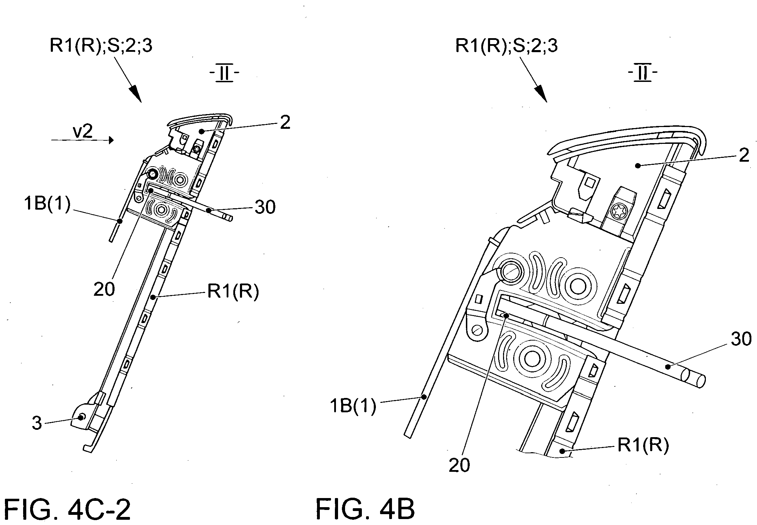

- Figur 4C-2: die Rückenlehne beziehungsweise ein Teil der Rückenlehne, e gemäß Figur 4B mit ihrer Rückenlehnenklappmechanik und das Lehnenschloss in Normalposition.

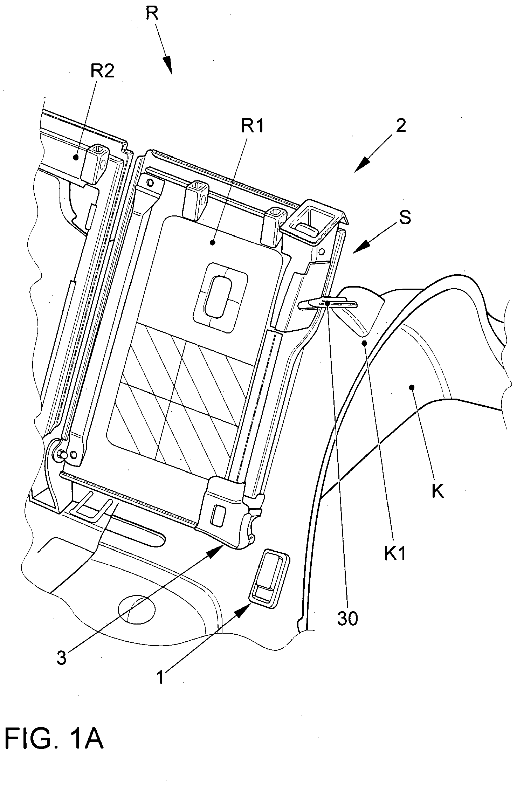

Figur 1A zeigt eine perspektivische Darstellung einer Verriegelungs- und Neigungsverstellanordnung am Beispiel eines Lehnenschlosses S, welches eine Rückenlehne R, R1, R2 mittels eines Schlossbügels 30 gegenüber einer Karosserie K in einer Verriegelungsposition I/II hält.

Im Ausführungsbeispiel ist das Lehnenschloss S seitlich und nahe eines oberen Randes eines ersten Teiles R1 einer zu einer Rücksitzbank gehörenden Rückenlehne R angeordnet. Die Rückenlehne R oder ein Teil der Rückenlehne R1, R2 ist mit Hilfe des Lehnenschlosses S gegenüber der Karosserie K verriegelbar und neigungsverstellbar I. Die Rückenlehne R ist im Ausführungsbeispiel zur Verdeutlichung der möglichen teilweisen Verriegelung und Neigungsverstellung der Rückenlehne R mehrteilig ausgeführt, so dass beispielsweise ein entriegeltes erstes Teil R1 der Rückenlehne R1 gegenüber einem zweiten Teil R2 der Rückenlehne R auf ein nicht näher dargestelltes Sitzteil klappbar ist. Analog ist das zweite Teil R2 der Rückenlehne R unabhängig von dem ersten Teil R1 der Rückenlehne R auf ein Sitzteil klappbar. Es versteht sich, dass eine ungeteilte Rückenlehne R oder eine mehrteilige Rückenlehne R, insofern die Teile R1, R2 der Rückenlehne R zeitweise lösbar miteinander verbunden sind, als Ganzes entriegelbar und auf das Sitzteil klappbar beziehungsweise als Ganzes neigungsverstellbar ist. Sollen die Teile R1, R2 der Rückenlehne R getrennt voneinander entriegelbar und neigungsverstellbar sein, wird an jedem Teil R1, R2 ein Lehnenschloss S angeordnet. Die nachfolgende Beschreibung erfolgt anhand eines ersten Teiles R1 der Rückenlehne R. Die Beschreibung gilt analog für ein zweites Teil R2 der Rückenlehne R oder für eine ganze Rückenlehne R.

Der Schlossbügel 30 ist im oberen Bereich eines zu der Karosserie K gehörenden Radhauses K1 angeordnet und fest mit dem Radhaus K1 verbunden. Vorzugsweise ist der Schlossbügel 30 mit dem Radhaus K1 verschweißt. Der Schlossbügel 30 ist mit seiner Längsachse in Fahrtrichtung ausgerichtet und befindet sich durch die Anordnung auf dem Radhaus K1 in etwa in der Höhe des Lehnenschlosses S. Der Schlossbügel 30 befindet sich somit ebenfalls nahe des oberen Randes des ersten Teiles R1 der beispielsweise zu einer Rücksitzbank gehörenden Rückenlehne R, wobei der Schlossbügel 30 hinter dem ersten Teil R1 der Rückenlehne R angeordnet ist, so dass er von hinten in das Lehnenschloss S eingreifen kann.

Die Verriegelung und Neigungsverstellung des ersten Teiles der Rückenlehne R1 gegenüber der Karosserie K, K1 mittels des Lehnenschlosses S ist karosserieseitig nur mit Hilfe des Schlossbügels 30 möglich. Weitere Bauteile werden karosserieseitig nicht benötigt. Hierdurch ist die gewünschte erste Randbedingung erfüllt, dass in vorteilhafter Weise karosserieseitig nur ein geringer Herstellungsaufwand notwendig ist.

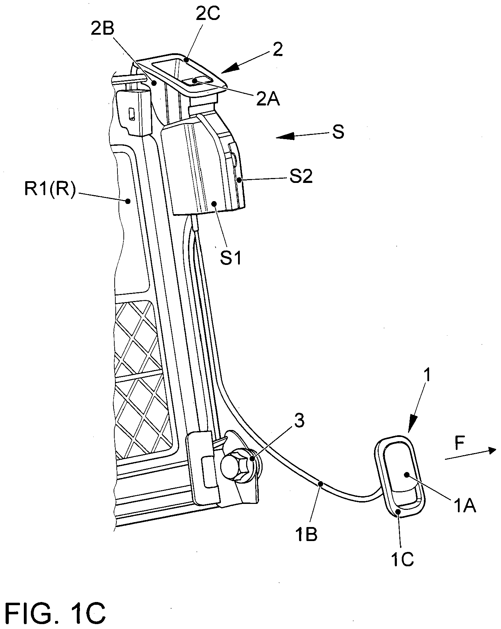

Zu der Verriegelungs- und Neigungsverstellanordnung gehören ferner eine erste Betätigungsmechanik 1, eine zweite Betätigungsmechanik 2 sowie eine Rückenlehnenklappmechanik 3, deren Anordnung innerhalb der Beschreibung der Figur 1C näher erläutert wird.

Die Rückenlehne R oder das erste und zweite Teil R1, R2 der Rückenlehne R ist im Fahrzeug in oder entgegen einer Fahrtrichtung des Fahrzeuges um eine Schwenkachse Y schwenkbar angeordnet.

Die im Ausführungsbeispiel im Bereich der Schwenkachse Y seitlich des ersten Teiles R1 der Rückenlehne R angeordnete Rückenlehnenklappmechanik 3 umfasst ein Federelement, welches dafür sorgt, dass eine Kraft auf das erste Teil R1 der Rückenlehne R oder insofern das erste Teil R1 mit dem zweiten Teil R2 der Rückenlehne R verbunden ist, auf die gesamte Rückenlehne ausgeübt wird, deren Kraftrichtung so angelegt ist, dass beispielsweise der entriegelte erste Teil R1 der Rückenlehne R oder die gesamte Rückenlehne R selbsttätig nach vorne schwenkt und auf das nicht näher dargestellte Sitzteil umklappt.

Damit das erste Teil R1 der Rückenlehne R oder die gesamte Rückenlehne R auf das Sitzkissen umklappen kann, muss das Lehnenschloss S gegenüber dem Schlossbügel 30 entriegelt werden, so dass das erste Teil der Rückenlehne R1 in eine Entriegelungsposition III kommen kann.

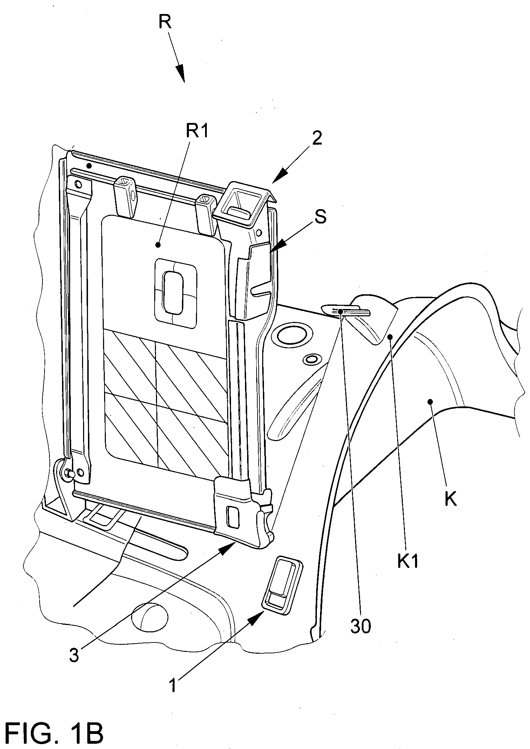

Diese Entriegelungsposition III des ersten Teiles der Rückenlehne R1 ist in Figur 1B dargestellt. Der Schlossbügel 30 ist von dem Lehnenschloss S getrennt, weshalb der erste Teil R1 der Rückenlehne R selbsttätig durch die Rückenlehnenklappmechanik 3 beginnt, aus einer gegenüber einer gedachten Vertikalen leicht nach hinten geneigten Position unter Überwindung des vertikalen Totpunktes auf das Sitzteil zu klappen. Die vollständige Entriegelung des Lehnenschlosses S wird mit Hilfe der zweiten Betätigungsmechanik 2 vorgenommen, worauf noch näher eingegangen wird.

Die Figur 1C zeigt eine vergrößerte perspektivische Darstellung der ersten und zweiten Betätigungsmechanik 1, 2 sowie der Rückenlehnenklappmechanik 3.

Die erste Betätigungsmechanik 1 kann im Bereich des Lehnenschlosses S sowohl an der Karosserie K, K1 als auch an der Struktur der Rückenlehne R, R1 angeordnet werden. Um eine besonders komfortable Bedienungsfreundlichkeit zu gewährleisten, wird die erste Betätigungsmechanik 1 im dargestellten Ausführungsbeispiel im Fahrzeug karosserieseitig nahe des unteren Bereiches der Rückenlehne R und nahe einer Vorderseite des nicht näher dargestellten Sitzteiles angeordnet. Dadurch ergibt sich zwischen dem Lehnenschloss S und der ersten Betätigungsmechanik 1 ein Abstand, der mit Hilfe eines Übertragungsmittels, im Ausführungsbeispiel mit Hilfe eines Bowdenzuges 1B überwunden wird.

Zu der ersten Betätigungsmechanik 1 gehört ein Betätigungselement 1A, welches in einer Aufnahmeschale 1C sitzt. Die Aufnahmeschale 1C ist karosserieseitig angebracht. Die erste Betätigungsmechanik 1 dient zur Betätigung des Lehnenschlosses S, um eine erste Rastposition I oder eine zweite Rastposition II des Schlossbügels 30 innerhalb des Lehnenschlosses S zu bewirken. In beiden Rastpositionen I, II befindet sich der erste Teil R1 der Rückenlehne R stets in einer Verriegelungsposition, jedoch in Abhängigkeit der Rastpositionen I, II innerhalb des Fahrzeuges in verschiedenen Positionen, worauf ebenfalls noch näher eingegangen wird.

In der vergrößerten Darstellung der Figur 1C wird ferner deutlich, dass das Lehnenschloss S einen Schlossgrundkörper S1 und einen Schlossgehäusedeckel S2 aufweist.

Im Ausführungsbeispiel sitzt die zweite Betätigungsmechanik 2 direkt auf dem Lehnenschloss S und ist somit als integraler Bestandteil des Lehnenschlosses S ausgeführt. Eine separate Anordnung der zweiten Betätigungsmechanik 2 unabhängig vom Lehnenschloss S ist möglich.

Die zweite Betätigungsmechanik 2 weist ein Betätigungselement 2A auf, welches ebenfalls in einer Aufnahmeschale 2C sitzt. Die Aufnahmeschale 2C wiederum ist in einem Gehäuse 2B der zweiten Betätigungsmechanik 2 verankert. Das Gehäuse 2B der zweiten Betätigungsmechanik 2 ist mit dem Schlossgrundkörper S1 gekoppelt, wodurch die zweite Betätigungsmechanik 2 Bestandteil des Lehnenschlosses S ist.

Im unteren Bereich des ersten Teiles R1 der geteilten Rückenlehne R ist die Rückenlehnenklappmechanik 3 vergrößert dargestellt. Sind das erste und zweite Teil R1, R2 der Rückenlehne R miteinander verbunden, bewirkt die Rückenlehnenklappmechanik 3, insofern das Lehnenschloss S vollständig entriegelt ist, ein Umklappen der gesamten Rückenlehne R oder Teilen davon R1, R2 auf das Sitzteil.

In der nachfolgenden Beschreibung wird auf den Aufbau und die Funktion des Lehnenschlosses S und auf den Aufbau und die Funktionen der Betätigungsmechaniken 1, 2 sowie auf die Rückenlehnenklappmechanik 3 eingegangen.

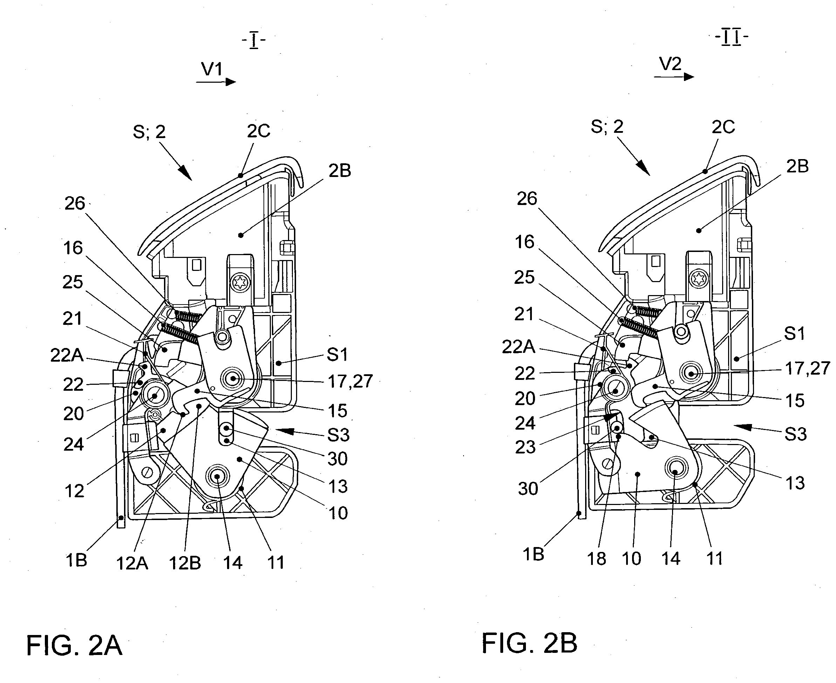

Zunächst zeigen die Figuren 2A, 2B jeweils in einer Seitenansicht das gehäusedeckellose Lehnenschloss S, mit dem sich in der ersten Rastposition I der Verriegelungsposition (Figur 2A) und dem sich in der zweiten Rastposition II der Verriegelungsposition (Figur 2A) befindenden Schlossbügel 30.

Das Lehnenschloss S (siehe beide Figuren 2A und 2B) umfasst die Aufnahmeschale 2C und das Betätigungselement 2A, welches im inneren der Aufnahmeschale 2C liegt und deshalb in den Figuren 2A, 2B nicht sichtbar ist. Der Schlossgrundkörper S1 weist eine Schlossaufnahme S3 auf, die den Schlossbügel 30 in das Lehnenschloss S führt beziehungsweise den Schlossbügel 30 in den Verriegelungspositionen I, II im Schlossgrundkörper S1 aufnimmt.

Das Lehnenschloss S umfasst die nachfolgend beschriebenen Bauteile, wobei auf die für die Funktion wesentlichen Bauteile eingegangen wird. Das Lehnenschloss S weist eine mit dem Schlossgrundkörper S1 verbundene erste und zweite Drehfalle 10, 20 auf. Der ersten Drehfalle 10 ist eine erste Sperrklinke 15 und der zweiten Drehfalle 20 ist eine zweite Sperrklinke 25 zugeordnet. Die Sperrklinken 15, 25 sind drehbar mit dem Schlossgrundkörper S1 verbunden.

Beide Drehfallen 10, 20 weisen eine maulartige Drehfallenaufnahme 13, 23 auf. An beiden Drehfallen 10, 20 ist eine Verriegelungskontur 12, 22 angeordnet.

Die Verriegelungskontur 12 der ersten Drehfalle 10 weist als einen ersten Konturbereich eine nutartige Aufnahme 12A auf, in die in der ersten Rastposition I der Verriegelungsposition (Figur 2A) der ersten Drehfalle 10 eine Nase der ersten Sperrklinke 15 eingreift. Gleichzeitig greift ein Rücksprung der ersten Sperrklinke 15 in einen hinsichtlich der Form mit der Kontur des Rücksprungs korrespondierenden zweiten Konturbereich eines stegartigen Aufnahmeabschnittes 12 B der ersten Drehfalle 10 ein.

Die Verriegelungskontur 22 der zweiten Drehfalle 20 ist als stegartiger Vorsprung 22A ausgeführt, wobei in der zweiten Rastposition II der Verriegelungsposition (Figur 2B) eine Nase der zweiten Sperrklinke 25 diesen stegartigen Vorsprung 22A der zweiten Drehfalle 20 hintergreift.

Die Verriegelungskonturen 12, 22 sind jeweils mit den zugehörigen Drehfallen 10, 20 verbunden, wobei die Drehfallen 10, 20 gegenüber dem Schlossgrundkörper S1 um eine im Ausführungsbeispiel quer zur Fahrtrichtung verlaufende Schwenkachse 14, 24 schwenkbar angeordnet sind.

Jeder Drehfalle 10, 20 ist ein Federelement 11, 21 zugeordnet, welches sich einendseitig am Schlossgrundkörper S1 abstützt und anderenends an den Drehfallen 10, 20 befestigt ist. Die Federelemente 11, 21 bewirken, dass eine verschwenkte Drehfalle 10, 20 in ihre vorgegebene Ausgangsposition zurückkehrt, wenn nicht von außen eine Kraft auf die jeweilige Drehfalle 10, 20 einwirkt.

Wird die jeweilige Drehfalle 10, 20 durch eine solche Krafteinwirkung verschwenkt, so spannt sich das jeweils zugehörige Federelement 11, 21. Nach Rücknahme der äußeren Kraft entspannt sich das jeweilige Federelement 11, 21, die gespeicherte Federspannkraft wird auf die jeweilige Drehfalle 10, 20 übertragen, so dass die jeweilige Drehfalle 10, 20 wieder in ihre Ausgangsposition zurückkehrt.

Im Ausführungsbeispiel wird das erste Federelement 11 gespannt, wenn sich gemäß der Figuren 2A, 2B die erste Drehfalle 10 entgegen der Uhrzeigerrichtung bewegt. Das zweite Federelement 21 der zweiten Drehfalle 20 wird gespannt, wenn sich gemäß den Figuren 2A, 2B die zweite Drehfalle 20 in Uhrzeigerrichtung bewegt.

Die Nasen der Sperrklinken 15, 25 werden über ihnen zugeordnete dritte und vierte Federelemente 16, 26, die einendseitig mit dem Schlossgrundkörper S1 und anderenends mit den Sperrklinken 15, 25 verbunden sind, drehbar jeweils über eine in der üblichen Einbauposition quer zur Fahrtrichtung liegende Drehachse 17, 27 mittels den vorgespannten Federelementen 16, 26 entgegen der Uhrzeigerrichtung in die jeweilige Verriegelungskontur 12, 22 der ersten beziehungsweise der zweiten Drehfalle 10, 20 bewegt.

Bei einer Bedienung des Betätigungselementes 1A der ersten Betätigungsmechanik 1 werden die Sperrklinken 15, 25 entgegen der Kraft des jeweiligen Federelementes 16, 26 in Uhrzeigerrichtung geschwenkt. Die zweite Sperrklinke 25 verlässt die zweite Verriegelungskontur 22 der zweiten Drehfalle 20, während die erste Sperrklinke 15 in dem Konturbereich, 12B der ersten Drehfalle 10 verriegelt bleibt. Zur Entriegelung der ersten Drehfalle 10 ist eine größerer Auslösehub der ersten Sperrklinke 15 erforderlich, der nur durch die Betätigung des zweiten Betätigungselementes 2A der zweiten Betätigungsmechanik 2 ausgeübt wird.

Im Ausführungsbeispiel ist die erste Sperrklinke 15 und die zweite Sperrklinke 25 auf einer gemeinsamen quer zur Fahrtrichtung liegenden Drehachse 17, 27 drehbar angeordnet.

Die in Figur 2A dargestellte erste Rastposition I des Schlossbügels 30 im Lehnenschloss S wird erreicht, wenn das Lehnenschloss S des ersten Teiles R1 der Rückenlehne R mit einer ersten Geschwindigkeit V1 entgegen der Fahrtrichtung (im Fahrzeug von vorne nach hinten) gegen den Schlossbügel 30 gedrückt beziehungsweise bewegt wird. Als erste Geschwindigkeit V1 ist eine gegenüber einer üblichen normalen zweiten Geschwindigkeit V2 der Betätigung des ersten Teiles R1 der Rückenlehne R langsamere erste Geschwindigkeit V1 (V1<V2) vorgesehen.

Diese erste Rastposition I, als eine der Verriegelungspositionen, bei der das erste Teil R1 der Rückenlehne R mit der ersten Geschwindigkeit V1 gemäß Figur 2A von links nach rechts bewegt worden ist, wird eingestellt, um im Fahrzeug eine Frachtposition des ersten Teiles R1 der Rückenlehne R, die auch als Cargolage bezeichnet wird, zu bewirken. Der Schlossbügel 30 sitzt in der ersten Rastposition I des Lehenschlosses S in einer Drehfallenaufnahme 13 der ersten Drehfalle 10.

Die in Figur 2B dargestellte zweite Rastposition II des Schlossbügels 30 im Lehnenschloss S wird erreicht, wenn das Lehnenschloss S des ersten Teiles R1 der Rückenlehne R mit der zweiten normal üblichen Geschwindigkeit V2 entgegen der Fahrtrichtung (im Fahrzeug von vorne nach hinten) gegen den Schlossbügel 30 gedrückt beziehungsweise bewegt wird.

Diese zweite Rastposition II, als eine der Verriegelungspositionen, bei der das erste Teil R1 der Rückenlehne R mit der zweiten Geschwindigkeit V2 gemäß Figur 2B von links nach rechts bewegt worden ist, wird eingestellt, um im Fahrzeug eine Normalposition des ersten Teiles R1 der Rückenlehne R zu bewirken, die einer üblichen Sitzposition eines Passagiers entspricht, Der Schlossbügel 30 sitzt in der zweiten Rastposition II des Lehenschlosses S in einer Drehfallenaufnahme 23 der zweiten Drehfalle 20.

Der Aufbau des Lehnenschlosses S und die zugehörigen Betätigungsmechaniken 1, 2 sowie die Rückenlehnenklappmechanik 3 ermöglichen folgende Vorgehensweise bei der Neigungsverstellung beziehungsweise der Verriegelung einer Rückenlehne R beziehungsweise eines Teiles R1, R2 einer Rückenlehne R gegenüber der Karosserie K, K1.

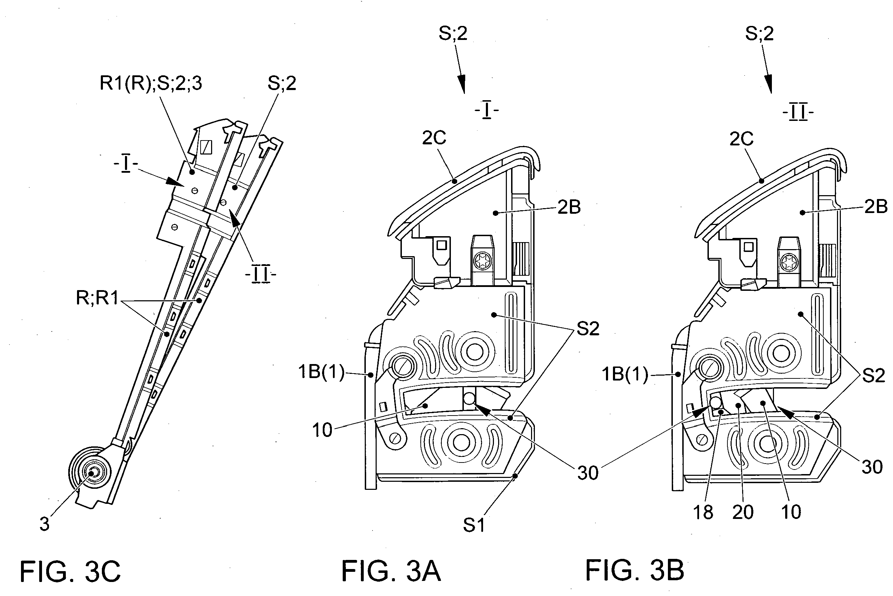

Die Figuren 3A, 3B zeigen ergänzend zu Figur 2A, 2B eine Seitenansicht des jetzt eingehausten Lehnenschlosses S jeweils in Verriegelungsposition in der ersten Rastposition I (Figur 3A) sowie in der zweiten Rastposition II (Figur 3B).

Innerhalb der Schlossaufnahme S3 des Lehnenschlosses S sind im Wesentlichen nur noch die erste und die zweite Drehfalle 10, 20 sichtbar, so dass in der nachfolgenden detaillierten Beschreibung der Funktionen vergleichend wieder auf die Figuren 2A, 2B zurückgegriffen wird.

Figur 3C zeigt das erste Teil R1 der Rückenlehne R in einer Seitenansicht in der ersten Rastposition I (links) und in der zweiten Rastposition II (rechts).

Das erste Teil R1 der Rückenlehne R ist in der ersten Rastposition I des Lehnenschlosses S gegenüber einer gedachten Vertikalen steiler angeordnet. Diese Position entspricht der Frachtposition oder Cargolage des ersten Teiles R1 der Rückenlehne R, da ein sich hinter dem ersten Teil R1 der Rückenlehne R befindender Ladegutraum ein größeres Frachtvolumen aufweist. Im Ausführungsbeispiel wird ein Anstellwinkel des ersten Teiles R1 der Rückenlehne R von ca. 22° bis 26° vorgeschlagen, der zwischen einer gedachten Vertikalen und einer Längsachse des angestellten ersten Teiles R1 der Rückenlehne R ausgebildet ist.

Das erste Teil R1 der Rückenlehne R ist in der zweiten Rastposition II des Lehnenschlosses S gegenüber einer gedachten Vertikalen weniger steil angeordnet. Diese Position entspricht der Normalposition des ersten Teiles R1 der Rückenlehne R, wobei der sich hinter dem ersten Teil R1 der Rückenlehne R befindende Ladegutraum gegenüber der Frachtposition oder der Cargolage ein geringeres Frachtvolumen aufweist. Im Ausführungsbeispiel wird ein Anstellwinkel des ersten Teiles R1 der Rückenlehne R, der von einem auf dem Fahrzeugsitz Sitzenden als angenehm empfunden wird, von circa 28° bis 32° vorgeschlagen, der zwischen der gedachten Vertikalen und der Längsachse des angestellten ersten Teiles R1 der Rückenlehne R ausgebildet ist.

### Umklappfunktion der Rückenlehne:

Zum Umklappen des ersten Teiles R1 der Rückenlehne R wird das Betätigungselement 2A der zweiten Betätigungsmechanik 2 betätigt. Durch diese Betätigung, sowohl in der ersten als auch in der zweiten Rastposition I, II ausführbar ist, wird über eine nicht näher dargestellte Mechanik der zweiten Betätigungsmechanik 2 durch einen gegenüber der der ersten Betätigungsmechanik 1 möglichen größeren Auslösehub der ersten Sperrklinke 15 dafür gesorgt, dass die Sperrklinken 15, 25 in eine Position kommen, bei der die Nasen der Sperrklinken 15, 25 gegenüber den Verriegelungskonturen 12, 22 der Drehfallen 10, 20 keine Verriegelungsposition I, II mehr einnehmen.

Je nach dem in welcher Position, der ersten oder zweiten Rastposition I, II das erste Teil R1 der Rückenlehne R gerade sitzt, wird durch die starke Kraft des Federelementes der Rückenlehnenklappmechanik 3 und überlagert durch die geringere Kraft, der sich durch die jeweiligen Federelemente 11, 21 rückstellenden Drehfallen 10, 20 dafür gesorgt, dass die Rückenlehne R oder Teile davon R1, R2 frei auf das Sitzkissen klappbar ist/sind. Dazu geben die jetzt unverriegelten Drehfallen 10, 20 den in den maulartigen Drehfallenaufnahmen 13, 23 der Drehfallen 10, 20 liegenden Bereich des Schlossbügels 30 frei. Die Rückenlehne R oder Teile davon R1, R2 ist/sind vollständig entriegelt.

Hierdurch wird die geforderte zweite Randbedingung erfüllt, die ein Umlegen der Rückenlehne R oder eines Teiles R1, R2 der Rückenlehne R auf ein Sitzteil fordert.

### Frachtposition der Rückenlehne:

Aus der Umklappposition, einer Entriegelungsposition III, bei der das erste Teil R1 der Rückenlehne R um im wesentlichen 90° auf das Sitzteil geklappt ist, kann die Rückenlehne R, R1, R2 in die erste Rastposition I gebracht werden. Wurde das zweite Betätigungselement 2A der zweiten Betätigungsmechanik 2 nach Entriegelung und Umklappen des ersten Teiles R1 der Rückenlehne R losgelassen, nehmen die Drehfallen 10, 20 ohne den im Lehnenschloss S verrasteten Schlossbügel 30 folgende Positionen ein: Die unverriegelten Drehfallen 10, 20 werden jeweils durch ihre Federelemente 11, 21 in einer Ausgangsposition positioniert.

Die erste Drehfalle 10 nimmt durch die Kraft des zugehörigen ersten Federelementes 11 eine Ausgangsposition ein, bei der die Flanken des Maules ihrer Drehfallenaufnahme 13 im Wesentlichen parallel zu den Flanken der Schlossaufnahme S3 angeordnet sind (nicht dargestellt).

Die zweite Drehfalle 20 nimmt durch die Kraft des zugehörigen zweiten Federelementes 21 eine Ausgangsposition ein, bei der Öffnung des Maules ihrer Drehfallenaufnahme 23 zu der Schlossaufnahme S3 gerichtet ist (nicht dargestellt).

Der erste Teil R1 der Rückenlehne R wird ausgehend von der beschriebenen Ausgangsposition der Drehfallen 10, 20 des Lehnenschlosses S (Figur 4A, 4C-1 von links nach rechts) unter Überwindung des vertikalen Totpunktes nach oben und unter Überwindung des vertikalen Totpunktes im Fahrzeug nach hinten geklappt, so dass die Schlossaufnahme S3 den quer liegenden Bereich des Schlossbügels 30 erreicht, wodurch der Schlossbügel 30 in die Drehfallenaufnahme 13 der ersten Drehfalle 10 eindringt. Die erste Drehfalle 10 wird entgegen der Uhrzeigerrichtung um die Schwenkachse 14 verschwenkt und wird mittels der Nase und dem Rücksprung der ersten Sperrklinke 15 in den Verriegelungskonturenbereichen 12A, 12B der ersten Drehfalle 10 fest verriegelt, wie in Figur 2A, 3A, 4A, 4C-2 gezeigt ist. Das zugehörige dritte Federelement 16 der ersten Sperrklinke 15 zieht dabei die erste Sperrklinke 15 über die Drehachse 17 der ersten Sperrklinke 15 entgegen der Uhrzeigerrichtung auf die erste Verriegelungskontur 12 in die nutartige Aufnahme 12A und den stegartigen Aufnahmeabschnitt 12B hinein. Die Drehfallenaufnahme 13 steht jetzt innerhalb des Lehnenschlosses S nach oben offen (Figur 2A) im Wesentlichen vertikal und sichert den Schlossbügel 30 in der ersten Rastposition I.

Diese erste Rastposition I wird nur erreicht, wenn der erste Teil R1 der Rückenlehne R mit einer langsameren ersten Geschwindigkeit V1, die kleiner ist als die übliche normale zweite Geschwindigkeit V2 gegen den Schlossbügel 30 gedrückt beziehungsweise bewegt wird.

### Normalposition der Rückenlehne:

Der erste Teil R1 der Rückenlehne R wird ausgehend von der beschriebenen Ausgangsposition der Drehfallen 10, 20 des Lehnenschlosses S (Figur 4B, 4C-2 von links nach rechts) nach oben und unter Überwindung des vertikalen Totpunktes im Fahrzeug nach hinten geklappt, so dass die Schlossaufnahme S3 den quer liegenden Bereich des Schlossbügels 30 erreicht, wodurch der Schlossbügel 30 in die Drehfallenaufnahme 23 der zweiten Drehfalle 20 eindringt.
Die zweite Rastposition II wird nur erreicht, wenn das erste Teil R1 der Rückenlehne R mit der üblichen zweiten Geschwindigkeit V2 die größer ist als die erste Geschwindigkeit V1 gegen den Schlossbügel 30 gedrückt beziehungsweise bewegt wird.

Bei der Klappung des ersten Teiles R1 der Rückenlehne R mit der zweiten Geschwindigkeit V2, die größer ist als die erste Geschwindigkeit V1, bei der das Lehnenschloss S gegen den Schlossbügel 30 gedrückt beziehungsweise bewegt wird, kommt es dazu, dass die erste Drehfalle 10 überfahren wird, da die Massenträgheit der ersten Sperrklinke 15 so groß ist, dass eine Verriegelung der ersten Drehfalle 10 in der ersten Rastposition I nicht möglich ist.

Anders ausgedrückt, ist bei der Klappung des ersten Teiles R1 der Rückenlehne R, wenn die erste Drehfalle 10 des Lehnenschloss S mit der zweiten Geschwindigkeit V2 gegen den Schlossbügel 30 gedrückt beziehungsweise bewegt wird, die Drehbewegungsbeschleunigung der ersten Sperrklinke 15 um die Drehachse 17 nicht groß genug, um eine Verriegelung gegenüber der ersten Drehfalle 10 zu bewirken.

Die zweite Drehfalle 20 wird, nachdem der Schlossbügel 30 die zweite Drehfalle 20 erreicht hat, in Uhrzeigerrichtung um die Schwenkachse 24 verschwenkt und wird mittels der Nase der zweiten Sperrklinke 25 an der Verriegelungskontur 22 fest verriegelt, wie in Figur 2B, 3B, 4B, 4C-2 gezeigt ist. Das zugehörige vierte Federelement 26 der zweiten Sperrklinke 25 zieht dabei die zweite Sperrklinke 25 über die Drehachse 27 der zweiten Sperrklinke 15 entgegen der Uhrzeigerrichtung hinter den stegartigen Vorsprung 22A der Verriegelungskontur. Die Drehfallenaufnahme 23 der zweiten Drehfalle 20 steht jetzt innerhalb des Lehnenschlosses S nach unten offen (Figur 2B) im Wesentlichen vertikal und sichert den Schlossbügel 30.

In dieser zweiten Rastposition II bleibt der Schlossbügel 30 jedoch mit der ersten Drehfalle 10 in Kontakt und bildet einen Kontaktpunkt 18 (Figur 2B, 3B) aus, der die erste Drehfalle 10 in der zweiten Rastposition II in einer günstigen Übergabeposition für den Schlossbügel 30 hält, wie nachfolgend noch weiter erläutert wird.

Diese zweite Rastposition II wird nur erreicht, wenn der erste Teil R1 der Rückenlehne R mit einer normalen zweiten Geschwindigkeit V2, die größer ist als die erste Geschwindigkeit V1 gegen den Schlossbügel 30 gedrückt wird. Anders definiert, wird die erste Rastposition I nur dann erreicht, wenn die erste Geschwindigkeit V1 des ersten Teiles R1 der Rückenlehne R zum Einrasten des Schlossbügels 30 gegenüber der zweiten normal üblichen Geschwindigkeit V2 kleiner, also die Bewegung des ersten Teiles R1 der Rückenlehne R langsamer ist.

Somit wird die zweite Randbedingung erfüllt, die für das Lehnenschloss S fordert, dass die Rückenlehne R oder ein Teil R1, R2 der Rückenlehne R in einfacher Weise neigungsverstellbar ist.

### Wechsel der Rückenlehne von Frachtposition zu Normalposition und umgekehrt:

Die bisherige Beschreibung hat verdeutlicht, dass der erste Teil R1 der Rückenlehne R in verschiedenen geneigten Positionen (Frachtposition I und Normalposition II) verstellbar ist. Darüber hinaus ist jedoch auch ein Wechsel der Positionen von der Frachtposition I in die Normalposition II und umgekehrt möglich.

Dabei ist eine Verstellung der verschiedenen Positionen - Frachtposition zu Normalposition I, II oder umgekehrt - möglich, ohne dass dabei ein Teil R1, R2, oder die Rückenlehne R gegenüber dem Schlossbügel 30 und somit gegenüber der Karosserie K, K1 vollständig entriegelt werden muss. Hierdurch ist die dritte Randbedingung einer erhöhten Sicherheit der Verriegelungs- und Verstellanordnung und somit einer erhöhten Sicherheit der Rückenlehne R, R1, R2 bei einer Verstellung der Rückenlehne R, R1, R2 in einem möglichen Crashfall gewährleistet, wie nachfolgend erläutert wird.

Um die Rastpositionen I, II zu wechseln, muss jeweils das Betätigungselement 1 der ersten Betätigungsmechanik 1 betätigt werden.

Ist beispielsweise die Frachtposition (erste Rastposition I) eingestellt und ein auf dem Fahrzeugsitz Sitzender möchte die Normalposition (zweite Rastposition II) einstellen (Wechsel von Figur 2A zu Figur 2B), so wird er das komfortabel erreichbare Betätigungselement 1A betätigen. Die erste Sperrklinke 15 und die zweite Sperrklinke 25 wird betätigt und die erste Sperrklinke 15 gibt den Verriegelungskonturbereich 12A frei. Wird die Rückenlehne R, R1 durch den Aufsitzenden oder in anderer Weise nach hinten, das heißt weiter gegen den Schlossbügel 30 gedrückt, so kommt der Schlossbügel 30 in die noch in der Ausgangsposition liegende Drehfallenaufnahme 23 der zweiten Drehfalle 20 und wird nach Loslassen des ersten Betätigungselementes 1A, wie bereits beschrieben, mittels der zweiten Sperrklinke 25 an der zweiten Verriegelungskontur 22 in der Normalposition II verriegelt beziehungsweise verrastet (Figur 2B, 3B, 4B, 4C-2).

Ist die Normalposition (zweite Rastposition II) eingestellt und ein auf dem Fahrzeugsitz Sitzender möchte die Frachtposition (erste Rastposition I) einstellen (Wechsel von Figur 2B zu Figur 2A), so wird er wieder das komfortabel erreichbare Betätigungselement 1A betätigen.

In diesem Fall werden wieder beide Sperrklinken 15 und 25 betätigt, wobei die zweite Sperrklinke 25 gegenüber der zweiten Verriegelungskontur 22 entriegelt, so dass der erste Teil R1 der Rückenlehne R unterstützt durch die starke Federkraft der Rückenlehnenklappung 3 und überlagert durch die Federkraft des zweiten Federelementes 21 durch die sich rückstellende zweite Drehfalle 20 wieder von der Drehfallenaufnahme 13 der ersten Drehfalle 10 aufgenommen wird. Die problemlose Übergabe wird ermöglicht, da der Schlossbügel 30 in der zweiten Rastposition II durch den Kontaktpunkt 18 (Figur 2B, 3B) mit der ersten Drehfalle 10 in Kontakt geblieben ist und die erste Drehfalle 10 in der zweiten Rastposition II in einer günstigen Übergabeposition für den Schlossbügel 30 hält. Der Schlossbügel 30 gleitet somit problemlos in die Drehfallenaufnahme 13 der ersten Drehfalle 10.

Dabei wird die erste Drehfalle 10 jedoch nur soweit in Uhrzeigerrichtung gedreht und mittels der ersten Sperrklinke 15 verriegelt (Figur 2A, 3A, 4A, 4C-1), dass der Schlossbügel 30 die erste Drehfallenaufnahme 13 der ersten Drehfalle 10 nicht verlassen kann. Der Schlossbügel 30 bleibt innerhalb des Lehnenschlosses S gesichert, da die Verriegelungskontur 12 mit ihrem Konturbereich 12B weiterhin in überdeckter Stellung zu der ersten Sperrklinke 15 steht, da der Auslösehub der ersten Sperrklinke 15 bei der Betätigung des ersten Betätigungselementes 1A der ersten Betätigungsmechanik geringer ist, als bei der zweiten Betätigungsmechanik 2. Der Auslösehub der ersten Sperrklinke 15 ist bei der Betätigung des ersten Betätigungselementes 1A nur so groß, dass die erste Drehfalle 10 nicht von der ersten Sperrklinke 15 frei kommt.

Eine vollständige Entriegelung der Rückenlehne R oder eines Teiles R1, R2 der Rückenlehne R ist, wie bereits erläutert, nur bei Betätigung der zweiten Betätigungsmechanik 2 möglich.

Da karosserieseitig nur der Schlossbügel 30 angeordnet ist, können die Lehnenschlösser S dieser Erfindung oder auch andere gattungsgemäße Lehnenschlösser eingesetzt werden ohne das karosserieseitige Veränderungen notwendig sind. Die Rückenlehnen R können modular mit anderen Lehnenschlössern versehen. Hierdurch ergibt sich in vorteilhafter Weise eine erhöhte Variabilität hinsichtlich des Einsatzes unterschiedlicher Lehnenschlösser.

Ferner wird vorgeschlagen, die zweite Betätigungsmechanik 2 steuerungsseitig mit der Geschwindigkeit des Fahrzeuges zu koppeln. Eine Entriegelung über das zweite Betätigungselement 2A der zweiten Betätigungsmechanik 2 zur Entriegelung der Rückenlehne R oder Teilen R1, R2 davon, wird unter Vorgabe bestimmter Bedingungen aus Sicherheitsgründen über diese Steuerung verhindert.

Als Bedingung wird aus Sicherheitsgründen die Geschwindigkeit des Fahrzeuges verwendet beziehungsweise steuerungsseitig aufgeschaltet. Ist das Fahrzeug in Bewegung wird eine Betätigung des zweiten Betätigungselementes 2A der zweiten Betätigungsmechanik 2 verhindert.

Die Betätigung des ersten Betätigungselementes 1A der ersten Betätigungsmechanik 1 zur Entriegelung der Rückenlehne R oder Teilen R1, R2 der Rückenlehne R, soll jedoch jederzeit erlaubt sein, da wie beschrieben keine Gefahr besteht, dass es bei Betätigung der ersten Betätigungsmechanik 1 beim Wechsel von Frachtposition I zu Normalposition II und umgekehrt zu einer vollständig entriegelten Position kommt.

### Bezugszeichenliste

- S: Schloss/Lehnenschloss
- S1: Schlossgrundkörper
- S2: Schlossgehäusedeckel
- S3: Schlossaufnahme
- R: Rückenlehne
- R1: erstes Teil einer Rückenlehne
- R2: zweites Teil einer Rückenlehne
- 1: erste Betätigungsmechanik
- 1A: erstens Betätigungselement
- 1B: Bowdenzug
- 1C: Aufnahmeschale
- 2: zweite Betätigungsmechanik
- 2A: zweites Betätigungselement
- 2B: Gehäuse
- 2C: Aufnahmeschale
- 3: Rückenlehnenklappmechanik
- 10: erste Drehfalle
- 11: erstes Federelement
- 12: erste Verriegelungskontur
- 12A: nutartige Aufnahme
- 12B: stegartiger Aufnahmeabschnitt
- 13: Drehfallenaufnahme
- 14: Schwenkachse der ersten Drehfalle
- 15: erste Sperrklinke
- 16: drittes Federelement
- 17: Drehachse der Sperrklinke
- 20: zweite Drehfalle
- 21: zweites Federelement
- 22: zweite Verriegelungskontur
- 22A: stegartiger Vorsprung
- 23: Drehfallenaufnahme
- 24: Schwenkachse der ersten Drehfalle
- 25: zweite Sperrklinke
- 26: viertes Federelement
- 27: Drehachse der Sperrklinke
- 30: Schlossbügel
- V1: erste Geschwindigkeit
- V2: zweite Geschwindigkeit
- I: Verriegelungsposition - erste Rastposition (Frachtposition/Cargolage)
- II: Verriegelungsposition - zweite Rastposition (Normalposition)
- III: Entriegelungsposition
- K: Karosserie
- K1: Radhaus
- Y: Schwenkachse (R, R1)

## Patentansprüche

1. Verriegelungs- und Neigungsverstellanordnung zur Verriegelung und Neigungsverstellung eines Bauteiles, umfassend einen karosserieseitigen Schlossbügel (30) und ein bauteilseitiges Schloss (S), welches in einer Verriegelungsposition (I, II) mit dem Schlossbügel (30) verbunden und in einer Entriegelungsposition (III) von dem Schlossbügel (30) lösbar ist, wobei das bauteilseitige Schloss (S) Drehfallen (10,20) mit ihnen zugeordneten Sperrklinken (15,25) aufweist, in denen das Bauteil in verschiedenen wieder lösbaren Rastpositionen (I, II) an dem in das Schloss (S) eingreifenden Schlossbügel (30) in verschiedene Neigungen verstellbar und verriegelbar und von dem Schlossbügel (30) getrennt in die Entriegelungsposition (III) bringbar ist, wobei
durch eine Betätigung einer der Anordnung zugeordneten ersten Betätigungsmechanik (1) eine Verstellung der verschiedenen Neigungen des Bauteiles von einer Rastposition zur anderen (I, II) und umgekehrt erfolgt und wobei eine Verstellung der verschiedenen Neigungen des Bauteiles von einer Rastposition zur anderen (I, II) und umgekehrt durch eine Betätigung der ersten Betätigungsmechanik erfolgt, ohne dass das Bauteil dabei in die Entriegelungsposition (III) kommt.

2. Verriegelungs- und Neigungsverstellanordnung nach Anspruch 1, **dadurch gekennzeichnet, dass** der Schlossbügel (30) ausschließlich durch eine Betätigung einer der Anordnung zugeordneten zweiten Betätigungsmechanik (2) eine Entriegelung des Bauteiles aus jeder der Rastpositionen (I, II) des Bauteiles in die Entriegelungsposition (III) des Bauteiles erfolgt.

3. Verriegelungs- und Neigungsverstellanordnung nach Anspruch 1, **dadurch gekennzeichnet, dass** das sich in der Entriegelungsposition (III) befindende Bauteil durch eine geschwindigkeitsabhängige Klappbewegung des Bauteiles in einer der Drehfallen (10, 20) in der einen oder anderen Rastposition (I, II) verriegelbar ist.

4. Verriegelungs- und Neigungsverstellanordnung nach Anspruch 1, **dadurch gekennzeichnet, dass** bauteilseitige Schloss (S) eine erste und eine zweite Drehfalle (10, 20) mit ihnen zugeordneten Sperrklinken (15, 25) aufweist, in denen das Bauteil in einer ersten Rastposition (I) in der ersten Drehfalle (10) oder einen zweiten Rastposition (II) in der zweiten Drehfalle (20) an dem in das Schloss (30) eingreifenden Schlossbügel (30) in verschiedene Neigungen verstellbar und lösbar verriegelbar ist.

5. Verriegelungs- und Neigungsverstellanordnung nach Anspruch 3 und 4, **dadurch gekennzeichnet, dass** das sich in der Entriegelungsposition (III) befindende Bauteil durch eine Klappbewegung in einer ersten Geschwindigkeit (V1) in der ersten Rastposition (I) in der ersten Drehfalle (10) verriegelt oder durch eine Klappbewegung in einer zweiten Geschwindigkeit (V2) in der zweiten Rastposition (II) in der zweiten Drehfalle (20) verriegelt, wobei die erste Geschwindigkeit (V1) kleiner ist als die zweite Geschwindigkeit (V2).

6. Verriegelungs- und Neigungsverstellanordnung nach Anspruch 1, **dadurch gekennzeichnet, dass** durch eine der Anordnung zugeordnete Rückenlehnenklappmechanik (3) eine federunterstützte selbsttätige Verstellung einer schwenkbaren Rückenlehne (R, R1, R2) eines Fahrzeugsitzes von den Rastpositionen (I, II) zu der Entriegelungsposition (III) oder von der zweiten Rastposition (II) der schwenkbaren Rückenlehne (R, R1, R2) zu der ersten Rastposition (I) erfolgt.

7. Fahrzeug mit einer Verriegelungs- und Neigungsverstellanordnung für ein Bauteil nach mindestens einem der Ansprüche 1 bis 6.

8. Fahrzeug nach Anspruch 7, **dadurch gekennzeichnet, dass** das Bauteil eine schwenkbare Rückenlehne (R, R1, R2) eines Fahrzeugsitzes in einem Fahrzeug ist.

9. Fahrzeug nach Anspruch 7, **dadurch gekennzeichnet, dass** die zweite Betätigungsmechanik (2) eine Entriegelung des Bauteiles aus jeder der Rastpositionen (I, II) des Bauteiles in die Entriegelungsposition (III) des Bauteiles zulässt, wobei auf die zweite Betätigungsmechanik (2) ein Steuerungssignal aufschaltbar ist, welches eine Entriegelung des Bauteiles nur dann zulässt, wenn sich das Fahrzeug nicht in Bewegung befindet.

## Claims

1. Locking and inclination-adjusting arrangement for locking and adjusting the inclination of a component, comprising a body-side lock bar (30) and a component-side lock (S) which, in a locking position (I, II), is connected to the lock bar (30) and, in an unlocking position (III), is releasable from the lock bar (30), wherein the component-side lock (S) has rotary latches (10, 20) with pawls (15, 25) which are assigned thereto, in which the component is adjustable into various inclinations and lockable in various re-releasable latching positions (I, II) on the lock bar (30), which engages in the lock (S), and can be brought separately from the lock bar (30) into the unlocking position (III), wherein, by actuation of a first actuating mechanism (1) assigned to the arrangement, an adjustment of the various inclinations of the component from one latching position to the other (I, II) and vice versa takes place, and wherein an adjustment of the various inclinations of the component from one latching position to the other (I, II) and vice versa takes place by actuation of the first actuating mechanism without the component coming into the unlocking position (III) in the process.

2. Locking and inclination-adjusting arrangement according to Claim 1, **characterized in that** the lock bar (30) undertakes unlocking of the component from each of the latching positions (I, II) of the component into the unlocking position (III) of the component exclusively by actuation of a second actuating mechanism (2) assigned to the arrangement.

3. Locking and inclination-adjusting arrangement according to Claim 1, **characterized in that** the component in the unlocking position (III) is lockable in the one or other latching position (I, II) by a speed-dependent folding movement of the component in one of the rotary latches (10, 20).

4. Locking and inclination-adjusting arrangement according to Claim 1, **characterized in that** component-side lock (S) has a first and a second rotary latch (10, 20) with pawls (15, 25) which are assigned thereto, in which the component is adjustable into various inclinations and is releasably lockable in a first latching position (I) in the first rotary latch (10) or a second latching position (II) in the second rotary latch (20) on the lock bar (30), which engages in the lock (30).

5. Locking and inclination-adjusting arrangement according to Claims 3 and 4, **characterized in that** the component which is in the unlocking position (III) locks in the first latching position (I) in the first rotary latch (10) by means of a folding movement at a first speed (V1) or locks in the second latching position (II) in the second rotary latch (20) by means of a folding movement at a second speed (V2), wherein the first speed (V1) is lower than the second speed (V2).

6. Locking and inclination-adjusting arrangement according to Claim 1, **characterized in that**, by means of a backrest-folding mechanism (3) assigned to the arrangement, a spring-assisted automatic adjustment of a pivotable backrest (R, R1, R2) of a vehicle seat from the latching positions (I, II) to the unlocking position (III) or from the second latching position (II) of the pivotable backrest (R, R1, R2) to the first latching position (I) takes place.

7. Vehicle with a locking and inclination-adjusting arrangement for a component according to at least one of Claims 1 to 6.

8. Vehicle according to Claim 7, **characterized in that** the component is a pivotable backrest (R, R1, R2) of a vehicle seat in a vehicle.

9. Vehicle according to Claim 7, **characterized in that** the second actuating mechanism (2) permits an unlocking of the component from each of the latching positions (I, II) of the component into the unlocking position (III) of the component, wherein the second actuating mechanism (2) can be sent a control signal which only permits unlocking of the component if the vehicle is not in motion.

## Revendications

1. Ensemble de verrouillage et de réglage de l'inclinaison pour le verrouillage et le réglage de l'inclinaison d'un élément, comprenant un étrier de serrure côté carrosserie (30) et une serrure côté élément (S), qui est assemblée à l'étrier de serrure (30) dans une position de verrouillage (I, II) et qui peut être séparée de l'étrier de serrure (30) dans une position de déverrouillage (III), dans lequel la serrure côté élément (S) présente des pênes tournants (10, 20) avec des cliquets de blocage (15, 25) associés à ceux-ci, dans lesquels l'élément peut être réglé et verrouillé dans différentes inclinaisons dans différentes positions d'encliquetage de nouveau séparables (I, II) sur l'étrier de serrure (30) s'engageant dans la serrure (S) et peut être amené dans la position de déverrouillage (III) de façon séparée de l'étrier de serrure (30), dans lequel on effectue par un actionnement d'un premier mécanisme d'actionnement (1) associé à l'ensemble un réglage des différentes inclinaisons de l'élément d'une position d'encliquetage à l'autre (I, II) et inversement, et dans lequel on effectue un réglage de différentes inclinaisons de l'élément d'une position d'encliquetage à l'autre (I, II) et inversement par un actionnement du premier mécanisme d'actionnement sans que l'élément vienne ainsi dans la position de déverrouillage (III).

2. Ensemble de verrouillage et de réglage de l'inclinaison selon la revendication 1, **caractérisé en ce que** l'étrier de serrure (30) effectue un déverrouillage de l'élément de chacune des positions d'encliquetage (I, II) de l'élément à la position de déverrouillage (III) de l'élément exclusivement par un actionnement d'un deuxième mécanisme d'actionnement (2) associé à l'ensemble.

3. Ensemble de verrouillage et de réglage de l'inclinaison selon la revendication 1, **caractérisé en ce que** l'élément se trouvant dans la position de déverrouillage (III) peut être verrouillé par un mouvement de rabattement dépendant de la vitesse dans un des pênes tournants (10, 20) dans l'une ou l'autre position d'encliquetage (I, II).

4. Ensemble de verrouillage et de réglage de l'inclinaison selon la revendication 1, **caractérisé en ce que** la serrure côté élément (S) présente un premier et un deuxième pênes tournants (10, 20) avec des cliquets de blocage (15, 25) qui leur sont associés, dans lequel l'élément peut être réglé et verrouillé de façon séparable dans différentes inclinaisons dans une première position d'encliquetage (I) dans le premier pêne tournant (10) ou une deuxième position d'encliquetage (II) dans le deuxième pêne tournant (20) sur l'étrier de serrure (30) s'engageant dans la serrure (30).

5. Ensemble de verrouillage et de réglage de l'inclinaison selon la revendication 3 et 4, **caractérisé en ce que** l'élément se trouvant dans la position de déverrouillage (III) se verrouille par un mouvement de rabattement avec une première vitesse (V1) dans la première position d'encliquetage (I) dans le premier pêne tournant (10) ou se verrouille par un mouvement de rabattement avec une deuxième vitesse (V2) dans la deuxième position d'encliquetage (II) dans le deuxième pêne tournant (20), dans lequel la première vitesse (V1) est inférieure à la deuxième vitesse (V2).

6. Ensemble de verrouillage et de réglage de l'inclinaison selon la revendication 1, **caractérisé en ce qu'**un réglage automatique à ressort d'un dossier pivotant (R, R1, R2) d'un siège de véhicule des positions d'encliquetage (I, II) à la position de déverrouillage (III) ou de la deuxième position d'encliquetage (II) du dossier pivotant (R, R1, R2) à la première position d'encliquetage (I) est effectué au moyen d'un mécanisme de rabattement de dossier (3) associé à l'ensemble.

7. Véhicule avec un ensemble de verrouillage et de réglage de l'inclinaison pour un élément selon au moins une des revendications 1 à 6.

8. Véhicule selon la revendication 7, **caractérisé en ce que** l'élément est un dossier rabattable (R, R1, R2) d'un siège de véhicule dans un véhicule.

9. Véhicule selon la revendication 7, **caractérisé en ce que** le deuxième mécanisme d'actionnement (2) permet un déverrouillage de l'élément à partir de chacune des positions d'encliquetage (I, II) de l'élément dans la position de déverrouillage (III) de l'élément, dans lequel un signal de commande, qui ne permet un déverrouillage de l'élément que lorsque le véhicule ne se trouve pas en mouvement, peut être envoyé au deuxième mécanisme d'actionnement (2).
